# EUROPÄISCHE PATENTSCHRIFT

(11) **EP 2 254 218 B1**
(45) Veröffentlichungstag und Bekanntmachung des Hinweises auf die Patenterteilung: **02.05.2018**
(21) Anmeldenummer: 10004641.6
(22) Anmeldetag: 03.05.2010
(51) Int. Cl.: H02J 7/00

(54) **Verfahren und Vorrichtung zum Aufladen von Akkumulatoren**
Device and method for charging batteries
Procédé et dispositif destinés à la charge d'accumulateurs

(30) Priorität: 04.05.2009 DE 102009003873
(43) Veröffentlichungstag der Anmeldung: 24.11.2010
(73) Patentinhaber: Paade GmbH, 78582 Balgheim (DE)
(72) Erfinder: Teufel, Thomas, 78582 Balgheim (DE); Teufel, Markus, 78532 Tuttlingen (DE)
(74) Vertreter: Geitz Truckenmüller Lucht Christ

(56) Entgegenhaltungen:
- EP-A2- 1 531 536
- WO-A2-2007/087662
- DE-A1-102005 045 107
- US-A- 5 828 201
- US-A1- 2004 178 766
- US-B1- 6 239 578

## Beschreibung

Die vorliegende Erfindung betrifft ein Verfahren zum Aufladen von Lithium-Ionen-Akkumulatoren, bei denen wenigstens eine Spannungsversorgung einen Verbraucher mit elektrischer Energie versorgt und zum Aufladen eines in mehrere parallel geschaltete, vorzugsweise gleichartige, Zellen unterteilten Akkumulators mit zumindest einer von dessen Zellen verbunden wird, wobei die Spannungsversorgung von einer Zelle regelmäßig erst nach einer vollständigen Aufladung der Zelle getrennt wird, und wobei in dem Fall, dass vor dem Abschluss der vollständigen Aufladung der Zelle (23) vonseiten der Spannungsversorgung nicht mehr genügend Spannung zum Fortsetzen des Aufladevorgangs bereitsteht, dieser durch eine Verbindung der Zelle mit zumindest einer der anderen Zellen fortgesetzt wird.

Ein ähnliches Verfahren, jedoch für Nickel-Kadmium-Akkumulatoren und anderen Akkumulatoren mit Memory-Effekt ist aus der DE 10 2005 045 107 A1 vorbekannt. Hier wird selektiv eine Zelle des Akkumulators ausgewählt, bis zu einem Maximalwert aufgeladen und wieder auf das Normalniveau der Batterie ausgeglichen, um die Batterie an die Vollladung gewöhnt zu halten und das Entstehen grobkristalliner Entladeprodukte zu vermeiden. Für einen Betrieb mit Litium-Ionen-Akkumulatoren eignet sich dieses Verfahren jedoch nicht, da diese Normalniveau der Batterie ausgeglichen, um die Batterie an die Vollladung gewöhnt zu halten und das Entstehen grobkristalliner Entladeprodukte zu vermeiden. Für einen Betrieb mit Litium-Ionen-Akkumulatoren eignet sich dieses Verfahren jedoch nicht, da diese zum Einen keinen Memory-Effekt aufweisen und andererseits durch diese zusätzlichen Ladezyklen künstlich gealtert würden.

Auch die WO 2007/087662 A2 spricht in diesem Zusammenhang lediglich von Behandlungsmöglichkeiten des Memory-Effekts, indem die Ladezustände einer Batterie so beeinflusst werden sollen, dass Abbaureaktionen in der Batterie ablaufen.

Entsprechende Vorrichtungen sind überdies aus vielen Elektrogeräten, welche mit wiederaufladbaren Batterien arbeiten, bekannt. So ist beispielsweise auf der Internetseite http://www.apple.com/de/macbookpro/17inchbattery/ #monitoring der Firma Apple ein Konzept dargestellt, welches insgesamt vier Akkumulatorzellen nebeneinander vorsieht, wobei für jede einzelne der Akkumulatorzellen exakt geprüft wird, welcher Lade- und Entladestrom für die jeweilige Zelle ideal ist. Durch dieses als "adaptive charging" bezeichnete Vorgehen ist eine erhöhte Lebensdauer der einzelnen Batteriezellen gewährleistet, was insbesondere beim Einsatz in tragbaren Computern, sogenannten Laptops, von zum Einen keinen Memory-Effekt aufweisen und andererseits durch diese zusätzlichen Ladezyklen künstlich gealtert würden.

Auch die WO 2007/087662 A2 spricht in diesem Zusammenhang lediglich von Behandlungsmöglichkeiten des Memory-Effekts, indem die Ladezustände einer Batterie so beeinflusst werden sollen, dass Abbaureaktionen in der Batterie ablaufen.

Entsprechende Vorrichtungen sind überdies aus vielen Elektrogeräten, welche mit wiederaufladbaren Batterien arbeiten, bekannt. So ist beispielsweise auf der Internetseite http://www.apple.com/de/macbookpro/17inch-battery/ #monitoring der Firma Apple ein Konzept dargestellt, welches insgesamt vier Akkumulatorzellen nebeneinander vorsieht, wobei für jede einzelne der Akkumulatorzellen exakt geprüft wird, welcher Lade- und Entladestrom für die jeweilige Zelle ideal ist. Durch dieses als "adaptive charging" bezeichnete Vorgehen ist eine erhöhte Lebensdauer der einzelnen Batteriezellen gewährleistet, was insbesondere beim Einsatz in tragbaren Computern, sogenannten Laptops, von großem Interesse ist um diese eine möglichst lange Zeit unabhängig von externen Spannungsversorgungen im Inselbetrieb zu betreiben.

Derartige Laptops sind bereits seit langem bekannt und Stand der Technik, wobei das Prinzip des Laptops im Wesentlichen darin liegt, dass der für den Betrieb des Rechners benötigte Strom nicht von einer stationären Spannungsquelle stammt, wie beispielsweise einer Steckdose, sondern in Form von Batterien oder Akkumulatoren mitgeführt wird. Dabei liegt es im ständigen Bestreben der Entwickler derartiger Laptops, die Batterien zum einen mit einer möglichst hohen Lebensdauer in Bezug sowohl auf ihre Gesamtverwendung, als auch ihre Kapazität, auszustatten.

Eine vielversprechende Lösung sieht ergänzend hierzu vor, weitere im Inselbetrieb funktionierende Spannungsquellen mit dem Laptop zu verbinden, so beispielweise gemäß der deutschen Patentanmeldung 10 2008 055 563 dem Laptop Solarzellenmodule mitzugeben, über welche durch die am Betriebs-ort auftretende Sonnenstrahlung zusätzliche Energie für den Laptop gewonnen werden kann. Auf diese Art und Weise ist es möglich, die im Laptop vorgesehenen Akkumulatoren durch den während des Inselbetriebs nachfließenden Anteil an elektrischer Energie länger im Inselbetrieb zu halten oder im Idealfall sogar den Laptop ausschließlich über die zusätzlich durch die Solarzellen gewonnene Energie zu betreiben.

Nachdem die Solarenergie allerdings lediglich bei ausreichender Sonneneinstrahlung für einen vollständigen Inselbetrieb ausreichend ist, bzw. auch ein Laptop bei ungünstigen Lichtverhältnissen betrieben werden soll, erscheint es unumgänglich, dem Laptop in jedem Fall einen Akkumulator mitzugeben. Derzeit eignet sich für den Betrieb mit einem Laptop, allerdings auch im Hinblick auf viele andere Anwendungen, der Lithium-Ionen-Akkumulator, welcher durch seine besonders hohe Effizienz in vielen Anwendungsbereichen Eingang gefunden hat. Insbesondere zeigt sich beim Lithium-Ionen-Akkumulator kein Memory-Effekt, durch welchen insbesondere bei den bekannten Nickel-Kadmium-Akkumulatoren Kapazitätsverluste bei nicht vollständiger Auf- und Entladung entstehen. Ebenfalls sind Lithium-Ionen-Akkumulatoren durch ihre thermische Stabilität und die konstante gelieferte Spannung in vielen auch empfindlichen elektronischen Geräten anzutreffen.

Problematisch bei den Lithium-Ionen-Akkumulatoren ist die Alterung. Üblicherweise steht ein derartiger Akkumulator lediglich für eine begrenzte Anzahl von Ladezyklen zur Verfügung, wobei insbesondere die Dauer eines solchen Zyklus für die Alterung keine Rolle spielt. Also kann auch eine relativ kurze Aufladung und kurze Entladung eine ebenso starke Alterung des Lithium-Ionen-Akkumulators bewirken, wie ein vollständiges Auf- und ein anschließendes vollständiges Entladen des Akkumulators.

Soll nun insbesondere eine Kombination zwischen einem akkubetriebenen Gerät und einer zusätzlichen Versorgung durch Solarzellen entstehen, so stellt sich in diesem Zusammenhang das Problem ein, dass auf Grund sehr wechselnder Lichteinstrahlungen auf die Solarzelle teilweise sehr kurze Lade- und Entladezyklen im Gerät entstehen, wenn sich die Lichtverhältnisse kurzfristig so ändern, dass der Akkumulator zunächst geladen werden kann und im nächsten Moment wieder Strom aus dem Akkumulator benötigt wird. Eine derartige Konfiguration erscheint auf Grund der hier eintretenden Alterungsprozesse überaus uneffektiv zu sein.

Vor diesem Hintergrund liegt der vorliegenden Erfindung die Aufgabe zu Grunde, dem abzuhelfen und eine Möglichkeit zu schaffen, einen Lithium-Ionen-Akkumulator auch mit lediglich kurzfristig zur Verfügung stehenden Stromquellen effektiv zu betreiben, mithin die Alterungsprozesse eines Akkumulators bei dessen Aufladung zu berücksichtigen.

Erfindungsgemäß ist hierzu eine Konfiguration vorgesehen, in welcher ein Akkumulator in mehrere, insbesondere gleichartige Zellen unterteilt wird. Diese Zellen sind einander parallel geschaltet, so dass sich die Kapazitäten der einzelnen Zellen zueinander addieren. Die einzelnen Akkumulatorzellen können allerdings unabhängig voneinander angesteuert werden und insbesondere unabhängig voneinander in einen Ladezustand oder in eine Entladezustand gebracht werden. Es ist nunmehr im Rahmen der Erfindung darauf zu achten, dass stets eine Zelle, deren Aufladung einmal begonnen hat, durchgehend bis zum Ende des Aufladezyklus aufgeladen wird, also der Aufladezyklus nicht unterbrochen wird und insbesondere keine Energieentnahme erfolgt. Eine zum Aufladen ausgewählte Zelle des Akkumulators wird hierzu zunächst mit der Spannungsversorgung verbunden und erst dann wieder von der Spannungsversorgung getrennt, wenn die Aufladung der jeweiligen Zelle bis zu einem Maximalwert, welcher durch Überschreiten eines Schwellwertes festgestellt wird, vorangeschritten ist. Sofern Die Spannungsversorgung bereits vor Abschluss der vollständigen Aufladung des Akkumulators der Zelle nicht mehr zur Verfügung steht, so wird die fragliche Zelle aus der Energie der anderen Zellen weiter aufgeladen, die ohnehin in diesem Falle ihre Energie anstelle der externen Spannungsversorgung an den angeschlossenen Verbraucher liefern.

Hierdurch ist gewährleistet, dass ein Ladezyklus stets vollständig zu Ende geführt wird, also der Alterungsprozess einer Zelle soweit als möglich hinausgezögert wird. Darüber hinaus wird zum Abschließen eines Ladezyklus regelmä-ßig ein Stromsignal benötigt, welches zusätzlich Energie kostet, so dass auch dieses im Rahmen des vorgeschlagenen Verfahrens eingespart wird.

Konkret ist vorgesehen, dass zu einem Zeitpunkt höchstens genau eine Zelle aufgeladen wird, so dass sämtliche anderen verfügbaren Zellen die in ihnen gespeicherte Energie für den Verbraucher bereit halten. Es ist selbstverständlich auch möglich, mehrere Zellen parallel zu schalten, dergestalt, dass diese jeweils auch gleichzeitig geladen und gleichzeitig entladen werden, im Sinne der Erfindung wird eine solche Doppelzelle allerdings im Folgenden ebenfalls als lediglich eine Zelle angesehen. Dass zu einem Zeitpunkt lediglich eine Zelle aufgeladen wird, hat den besonderen Vorteil, dass eine Zelle, deren Aufladung einmal begonnen hat, für eine Entnahme von Energie gesperrt ist, so dass es sinnvoll ist, sämtliche verfügbare Energie in lediglich eine Zelle einfließen zu lassen und erst nach Abschluss des Ladevorgangs der einen Zelle mit der nächsten Zelle zu beginnen.

Umgekehrt ist es nur dann sinnvoll, mit dem Aufladen einer Zelle zu beginnen, wenn hierfür seitens der Spannungsversorgung auch genügend Energie zu Verfügung steht. Ansonsten würden sich die Akkumulatoren lediglich ständig umladen, was im Endeffekt keinen Sinn machen würde.

Lediglich eine vollständig aufgeladene Zelle wird sodann zur Abgabe von Energie an den Verbraucher - oder an eine andere zu ladende Zelle - freigegeben, es sei denn, die mit dem Laden begonnene Zelle wäre die einzige noch verbleibende Energiequelle im System. In diesem Fall würde die in der letzten verbliebenen Zelle gespeicherte Energie dem Verbraucher zur Verfügung gestellt.

Als eine Art "Energiepool" ist dem System ein Systembus zugeordnet, an welchen die Akkumulatoren sowie die Spannungsquellen und auch der Verbraucher anschließbar sind, derart, dass sämtliche Komponenten je nach Zustand des Systems auch vom Systembus wieder getrennt werden können. So wird bei einer Mitnahme des Laptops durch ein Trennen der Spannungsversorgung vom Systembus der Inselbetrieb begonnen, durch ein Ausschalten des Verbrauchers wird dieser seinerseits vom Systembus getrennt. Auch die Akkumulatorenzellen können vom Systembus getrennt werden, wobei diese in Bezug auf den Systembus auf zwei Arten mit diesem verbindbar sind, nämlich einmal zum Aufladen der jeweiligen Zellen über die am Systembus anliegende Energie oder alternativ zum Bereitstellen der in ihnen gespeicherten Energie auf dem Systembus.

Um auch im Inselbetrieb eine Versorgung seitens der Spannungsversorgung bereitstellen zu können, umfasst die Spannungsversorgung neben einem Netzteil, mit welchem der Systembus einem Spannungsnetz anverbunden werden kann, auch wenigstens eine Solarzellenanordnung, über welche Energie in Form von Solarenergie in elektrische Energie umgewandelt werden kann. Diese wird ergänzend zu der in den Akkumulatorzellen vorgehaltenen Energie dem Verbraucher zur Verfügung gestellt und im Falle eines Überschusses in die Zellen eingespeist.

Konkret besteht eine derartige Solarzellenanordnung ihrerseits wiederum aus unabhängig voneinander betreibbaren Solarblocks, welche an unterschiedlichen Stellen des Laptops angeordnet sein können. So eignet sich beispielsweise eine Handauflage im Bereich der Tastatur zur Aufnahme von Solarzellen, nachdem im Betrieb diese Fläche regelmäßig nach oben weist und somit eine relativ direkte Sonneneinstrahlung besitzen dürfte. Ungekehrt weist der Laptopdeckel ebenfalls eine große Fläche auf, welche mit Solarzellen bestückt werden kann, wobei diese Fläche im Betrieb tendenziell eher nach unten gerichtet ist und nur wenig Sonneneinstrahlung direkt bekommt.

Insoweit ist es auch sinnvoll, die einzeln ansteuerbaren Solarblocks jeweils mit einem Pufferkondensator zu versehen, welcher durch die von den Solarblocks ungewandelte Energie aufgeladen werden können. Zur Verbesserung der Effizienz der einzelnen Solarblocks ist jedem Pufferkondensator eine Induktivität zugeordnet, welche die Änderung der anliegenden Spannung feststellt. Auf Grund einer Erfassung dieses Spannungsmesswertes kann dann die ideale Ladespannung für den jeweiligen Pufferkondensator eingestellt werden, derart, dass eine möglichst große Energieausbeute aus jedem der Solarblocks erzielt werden kann. So kann beispielsweise ein Solarblock auf dem Laptopdeckel während des Betriebs, also wenn dieser nach unten weist auf eine niedrige Sonneneinstrahlung angepasst werden, wobei die selbe Anordnung nach dem Betrieb, also bei zugeklapptem Deckel, auf eine erhöhte Sonneneinstrahlung eingestellt wird.

Die Pufferkondensatoren sind sodann mit dem Systembus verbunden, um diesen mit Energie zu versorgen. Bedarfsweise kann hierfür ein Sammelkondensator als weiterer Puffer vorgesehen sein, um die Energie am Systembus möglichst konstant zu halten. Ein geeignetes Regelnetzwerk sorgt für eine Entleerung der Pufferkondensatoren in einem Maß derart, dass eine möglichst gleichmäßige Spannung in der korrekten Höhe am Systembus anliegt.

Als ein derartiger Sammelkondensator, oder auch ergänzend zu diesem, kann ein Pufferakkumulator vorgesehen sein, bei welchem es sich beispielsweise um einen Nickel-Kadmium-Akkumulator handelt. Ein derartiger Akkumulator leidet nicht an der Problematik, durch die Anzahl seiner Ladezyklen zu altern, sodass dieser als Puffer für die oben genannte Vorrichtung durchaus geeignet scheint.

Eine derartige Vorrichtung kann sowohl in den Laptop als solchen hinein integriert sein, als auch als vollständig externes Gerät alternativ zu den herkömmlichen Akkumulatoren im Laptopgehäuse von außen her angeschlossen sein. Auch ist es möglich, dass über externe Anschlüsse zusätzliche Solarblocks angeschlossen werden. So ist es insbesondere denkbar, ein Mousepad oder vergleichbare Pads an externe Solarblocks anzuschließen, welche entweder eine ohnehin benötigte Fläche im Bereich des Laptops abdecken, oder auch beispielsweise als reine zusätzliche bestrahlte Fläche aufgestellt werden. So mag es sinnvoll und angenehm sein, sich mit seinem Laptop unter einen Baum zu setzen und ein externes Pad in den Bereich neben den Baum aufzustellen um dort die volle Sonne auffangen zu können. Im Zusammenhang mit einer vollständig externen Vorrichtung, die entweder ersatzweise für eine oben genannte Vorrichtung oder ergänzend zu dieser vorhanden ist, können dieser wiederum auch Pufferkondensatoren, Sammelkondensatoren oder auch weitere Zellen zugeordnet sein.

Die vorstehend beschriebene Erfindung wird im Folgenden anhand eines Ausführungsbeispiels näher erläutert.

Es zeigen
- Figur 1: eine Vorrichtung zum Aufladen von Akkumulatoren in einer schematischen Darstellung,
- Figur 2: die Vorrichtung gemäß Figur 1 bei Wegfall der Spannungsversorgung, und
- Figur 3: die Vorrichtung gemäß Figur 1 mit einer angehängten Solarzellenanordnung.

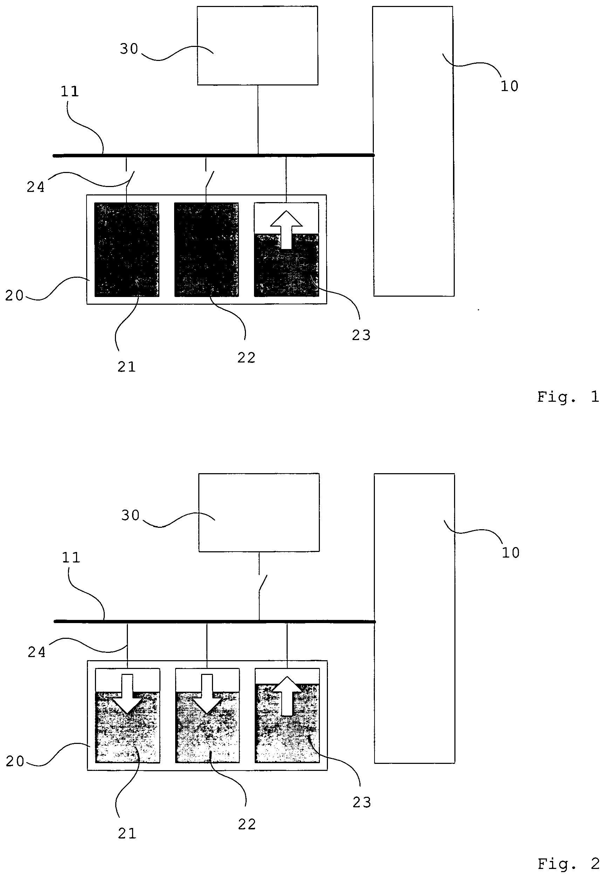

Figur 1 zeigt schematisch eine Vorrichtung zum Aufladen von Akkumulatoren, bei welcher ein Akkumulator 20 über einen Systembus 11 mit einem Verbraucher 10 verbunden ist. Ebenfalls ist an dem Systembus 11 eine Spannungsversorgung 30 angeschlossen, so dass im vorliegenden Fall der Verbraucher 10 über die Spannungsversorgung 30 mit Energie versorgt wird. Von der Spannungsversorgung 30 wird die erforderliche Spannung auf den Systembus 11 gelegt, auf dem nunmehr genügend Energie sowohl für den Betrieb des Verbrauchers 10 vorhanden ist, als auch überschüssige Energie zur Verfügung steht. Der ebenfalls an dem Systembus 11 angeschlossene Akkumulator 20 ist in drei Zellen 21, 22, 23 unterteilt, welche unabhängig voneinander mit dem Systembus 11 verbindbar und von diesem trennbar sind. Im vorliegenden Falle sind die erste Zelle 21 und die zweite Zelle 22 vollständig aufgeladen und, nachdem der Verbraucher 10 über die Spannungsversorgung 30 versorgt wird, vom Systembus 11 getrennt. Die dritte Zelle 23 ist mit dem Systembus 11 verbunden und wird mithilfe der am Systembus 11 überschüssig vorhandenen Energie aufgeladen.

Figur 2 zeigt die zuvor gesehene Vorrichtung, nachdem die Spannungsversorgung 30 vom Systembus 11 getrennt wurde, stellt also den Inselbetrieb eines Laptops dar. Der Verbraucher 10 wird nunmehr über den Systembus 11 durch die erste Zelle 21 und die zweite Zelle 22 versorgt. Nachdem nun seitens der Spannungsversorgung 30 keine Energie mehr zum weiteren Aufladen der dritten Zelle 23 zur Verfügung steht, wird die dritte Zelle 23 nunmehr ebenfalls aus der in der ersten Zelle 21 und der zweiten Zelle 22 gespeicherten Energie aufgeladen. Dies erfolgt, um den Aufladezyklus der dritten Zelle 23 nicht zu unterbrechen, also um die Alterung der dritten Zelle 23 möglichst hinauszuzögern. Sobald in diesem Zustand die dritte Zelle 23 vollständig gefüllt ist, wird der Aufladezyklus der dritten Zelle 23 beendet und die in der dritten Zelle 23 gespeicherte Energie ebenfalls für den Verbraucher 10 bereitgestellt. Ein Aufladezyklus für eine andere Zelle wird erst dann begonnen, wenn wieder eine externe Spannungsversorgung 30 an den Systembus 11 angeschlossen wird.

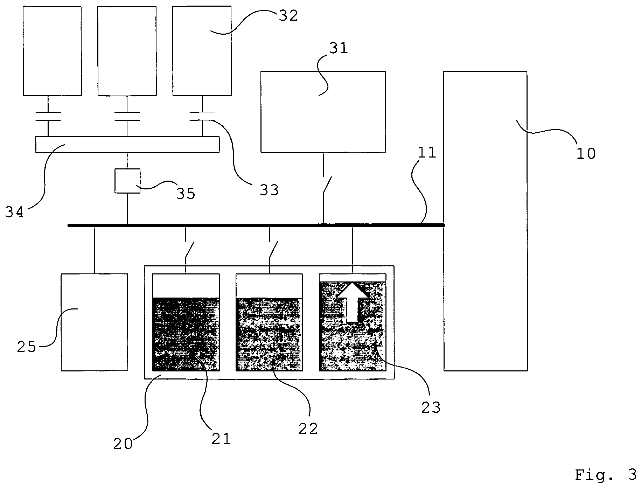

Figur 3 zeigt eine erweiterte Vorrichtung, bei welcher aufseiten der Spannungsversorgung 30 zwischen einem Netzteil 31 und Solarblocks 32 zu unterscheiden ist. Ein Netzteil 31 ist am Systembus 11 nicht angeschlossen, wohl aber ein mit dem Laptop verbundener Solarblock 32. Über diesen Solarblock 32 wird auf das Laptop einfallendes Sonnenlicht in elektrische Energie umgewandelt und auf dem Systembus 11 zur Versorgung des Verbrauchers 10 und zum Aufladen der Zellen 21, 22, 23 zur Verfügung gestellt. Die einzelnen Solarblocks 32 sind hierbei unabhängig voneinander ansprechbar, wobei jedem der Solarblocks 32 ein Pufferkondensator 33 zugeordnet ist um eine optimale Energiegewinnung durch die einzelnen Solarblocks 32 zu gewährleisten. Dies erfolgt dadurch, dass die Spannungsänderung am Pufferkondensator 33 festgestellt wird und die Ladespannung des Pufferkondensators hierauf angepasst wird. Auf diese Weise ist gewährleistet, dass Solarblocks 32 mit unterschiedlicher Sonneneinstrahlung auch unterschiedlich behandelt werden können, dahingehend, dass in den Solarblocks 32 eine geeignete Ladespannung für den Pufferkondensator 33 gewählt werden kann. Über einen Regler 34 wird außer diesen Pufferkondensatoren 33 ein Sammelkondensator 35 geladen, welcher die erforderliche Spannung des Systembusses 11 liefert. Parallel zu den Akkumulatoren 20 ist ergänzend noch ein Pufferakkumulator 25 am Systembus 11 vorgesehen, bei welchem es sich um einen Nickel-Kadmium-Akkumulator handelt. Bei einem solchen Akkumulator besteht das im Falle der Lithium-Ionen-Akkumulatoren bestehende Alterungsproblem nicht, so dass der Pufferakkumulator 25 auch trotz unvollständiger Ladezyklen keiner stärkeren Alterung unterliegt.

Die Versorgung des Verbrauchers 10 mit Spannung wird somit von den Solarblocks 32 geleistet, wobei auf Grund der Sonneneinstrahlung auch noch Energie zum weiteren Aufladen der dritten Zelle 23 vorhanden ist. Solange die dritte Zelle 23 nicht vollständig aufgeladen ist, wird ein Aufladezyklus bezüglich der ersten Zelle 21 bzw. der zweiten Zelle 22 ebenfalls nicht gestartet, zumal der Ladestand der fraglichen Akkumulatoren einen unteren Schwellwert ebenfalls noch nicht erreicht hat. Erst bei Unterschreiten des unteren Schwellwerts der gespeicherten Energie in den ersten und zweiten Zellen 21 und 22 wird eine Aufladung derselben initiiert.

Vorstehend beschrieben ist somit eine Vorrichtung und ein Verfahren zum Aufladen von Akkumulatoren, welches es ermöglicht, durch eine Einteilung des Akkumulators in verschiedene Zellen und deren nacheinander folgende Aufladung eine deutliche Verbesserung der Lebensdauer des Akkumulators herbeizuführen.

### BEZUGSZEICHENLISTE

- 10: Verbraucher
- 11: Systembus
- 20: Akkumulator
- 21: Erste Zelle
- 22: Zweite Zelle
- 23: Dritte Zelle
- 24: Schalter
- 25: Pufferakkumulator
- 30: Spannungsversorgung
- 31: Netzteil
- 32: Solarblock
- 33: Pufferkondensator
- 34: Regler
- 35: Sammelkondensator

## Patentansprüche

1. Verfahren zum Aufladen von Lithium-Ionen-Akkumulatoren, bei dem wenigstens eine Spannungsversorgung (30) einen Verbraucher (10) mit elektrischer Energie versorgt und zum Aufladen eines in mehrere parallel geschaltete, vorzugsweise gleichartige, Zellen (21,22,23) unterteilten Akkumulators (20) mit zumindest einer von dessen Zellen (21,22,23) verbunden wird, wobei die Spannungsversorgung (30) von einer Zelle (23) regelmäßig erst nach einer vollständigen Aufladung der Zelle (23) getrennt wird, und wobei in dem Fall, dass vor dem Abschluss der vollständigen Aufladung der Zelle (23) vonseiten der Spannungsversorgung (30) nicht mehr genügend Spannung zum Fortsetzen des Aufladevorgangs bereitsteht, dieser durch eine Verbindung der Zelle (23) mit zumindest einer der anderen Zellen (21, 22) fortgesetzt wird,
**dadurch gekennzeichnet, dass** die einzelnen Zellen (21,22,23) unabhängig voneinander in einen Ladezustand oder einen Entladezustand gebracht werden können und zu einem Zeitpunkt höchstens genau eine Zelle (23) aufgeladen wird und eine weitere Zelle (21, 22) erst nach Abschluss dieses Aufladevorgangs zu laden begonnen wird, sofern zudem ein unterer Schwellwert ihrer gespeicherten Energie unterschritten wird.

2. Verfahren gemäß Anspruch 1, **dadurch gekennzeichnet, dass** ein Aufladevorgang nur dann begonnen wird, wenn die hierfür benötigte Energie vonseiten der Spannungsversorgung (30) bereitsteht.

3. Verfahren gemäß einem der vorhergehenden Ansprüche, **dadurch gekennzeichnet, dass** eine Zelle (23) in ihr gespeicherte Energie erst nach ihrer vollständigen Aufladung an einen Verbraucher (10) abgibt, es sei denn, dass weder die Spannungsversorgung (30), noch eine andere Zelle (21, 22) zur Abgabe von elektrischer Energie an den Verbraucher (10) zur Verfügung steht.

## Claims

1. Method for charging lithium-ion batteries, in which at least one power supply (30) supplies a load (10) with electrical energy and, for charging a battery (21, 22, 23) divided into several parallel, preferably similar, cells (21, 22, 23) 20), is connected to at least one of its cells (21, 22, 23), wherein the power supply (30) is regularly disconnected from a cell (23) only after a complete charge of the cell (23), and wherein in the case that before the completion of the complete charging of the cell (23) by the power supply (30) there is insufficient voltage left to continue the charging process, said charging is continued by a connection of the cell (23) to at least one of the other cells (21, 22), **characterized in that** the individual cells (21, 22, 23) can be independently brought into a state of charge or a discharge state and at a point in time at most exactly one cell (23) is charged and another cell (21, 22) is started to charge only after completion of this charging process, as long as additionally a lower threshold of its stored energy is undershot.

2. Method according to claim 1, **characterized in that** a charging process is only started when the energy required for this purpose is provided by the power supply (30).

3. Method according to one of the preceding claims, **characterized in that** a cell (23) emits energy stored in it to a load (10) only after its complete charging, unless neither the power supply (30) nor another cell (21, 22) is available for supplying electrical energy to the load (10).

## Revendications

1. Procédé pour la recharge d'accumulateurs à ions lithium, dans lequel au moins une alimentation électrique (30) alimente un consommateur (10) en énergie électrique et est connectée à au moins une cellule (21, 22, 23) d'un accumulateur (20) divisé en une ou plusieurs cellules (21, 22, 23) montées en parallèle et de préférence identiques afin de recharger celui-ci, l'alimentation électrique (30) d'une cellule (23) n'étant normalement coupée que lorsque la cellule (23) a été complètement rechargée et, si l'alimentation électrique (30) ne dispose plus de suffisamment de tension pour poursuivre l'opération de recharge avant que la cellule (23) soit complètement chargée, cette opération se poursuit par la connexion de la cellule (23) à au moins une des autres cellules (21, 22),
**caractérisé en ce que** les différentes cellules (21, 22, 23) peuvent être chargées ou déchargées indépendamment les unes des autres et au maximum une cellule (23) exactement est en charge à un moment donné et une autre cellule (21, 22) ne commence à se charger qu'après que cette opération de recharge est terminée, à la condition en outre que l'énergie qu'elle a accumulée soit passée en dessous d'une limite inférieure.

2. Procédé selon la revendication 1, **caractérisé en ce qu'**une opération de recharge ne peut commencer que si l'alimentation électrique (30) peut fournir l'énergie nécessaire pour cela.

3. Procédé selon l'une des revendications précédentes, **caractérisé en ce qu'**une cellule (23) ne délivre l'énergie qu'elle a accumulée à un consommateur (10) que lorsqu'elle est complètement chargée, sauf si ni l'alimentation électrique (30) ni une autre cellule (21, 22) ne sont disponibles pour délivrer l'énergie électrique au consommateur (10).
